# EUROPEAN PATENT SPECIFICATION

(11) **EP 1 901 166 B1**
(45) Date of publication and mention of the grant of the patent: **25.04.2012**
(21) Application number: 06291453.6
(22) Date of filing: 14.09.2006
(51) Int. Cl.: G06F 9/50, H04L 29/08

(54) **Implementation of composite services**
Implementierung von Composite Services
Mise en oeuvre de services composites

(43) Date of publication of application: 19.03.2008
(73) Proprietor: SAP AG, 69190 Walldorf (DE)
(72) Inventor: Hebert, Cedric, 06250 Mougins (FR); Montagut, Frederic, 06600 Antibes (FR); Ulmer, Cedric, 06000 Nice (FR)
(74) Representative: Hössle Patentanwälte Partnerschaft

(56) References cited:
- YANPING YANG ET AL: "Setup Algorithm of Web Service Composition" LECTURE NOTES IN COMPUTER SCIENCE, 2005, pages 139-148, XP019021381 Berlin
- PONNEKANTI S R ET AL: "SWORD: A DEVELOPER TOOLKIT FOR BUILDING COMPOSITE WEB SERVICES" INTERNET CITATION, [Online] XP002329116 Retrieved from the Internet: URL:http://swig.stanford.edu/pub/publicati ons/sword/www11.pdf> [retrieved on 2005-05-07]
- WOODMAN S J ET AL: "Notations for the specification and verification of composite web services" ENTERPRISE DISTRIBUTED OBJECT COMPUTING CONFERENCE, 2004. EDOC 2004. PROCEEDINGS. EIGHTH IEEE INTERNATIONAL MONTEREY, CA, USA 20-24 SEPT. 2004, PISCATAWAY, NJ, USA,IEEE, 20 September 2004 (2004-09-20), pages 35-46, XP010730211 ISBN: 0-7695-2214-9
- MITHUN SHESHAGIRI, MARIE DESJARDINS, TIM FININ: "A Planner for Composing Services Described in DAML-S" PROCEEDINGS OF THE AAMAS WORKSHOP ON WEB SERVICES AND AGENT-BASED ENGINEERING, [Online] June 2003 (2003-06), XP002417626 Melbourne, Australia Retrieved from the Internet: URL:http://www.csee.umbc.edu/~finin/papers /papers/aamas03b.pdf> [retrieved on 2007-01-30]

## Description

### Technical Field

Embodiments relate to the field of electronic data processing and more specifically to the architecture of services.

### Background and Prior Art

The field of electronic data processing has reached a high level of development. The development has lead to many services that are available in electronic data processing and that provide an abundance of functionalities. A service may be a modular unit of a software application that is provided by a computer system, for example, a server, a personal computer (PC), or a network of servers. A service may be accessible according to a specified standard and may be useable as a part of one or more applications. A plurality of services may be composed to give a composite service. A service may be easily accessible, for example, through the Internet or an Intranet of one or more enterprises. A service may be accessible to the public or to employees of a company on an internal system for which the access is controlled.

An example for a service is a Web service that may be accessed through the Internet. In an example, data may be exchanged between one or more Web services using the XML standard according to internet based protocols. Composing Web services to give a composite Web service is a powerful way to create new applications that include a complete process. An example for such an application may be an online purchase of a specific product or service that includes also an online payment method.

In a contribution to the ICA3PP-2005 conference, LNCS 3719, pp, 139-148, by the authors YanPing Yang et al. with title "Setup Algorithm of Web Service Composition" a creation of composite web services is described. The composite web services are created by matching input parameters of a service request with input parameters of a service and by matching output parameters of a service request with output parameters of one or more services being part of one or more service layers.

### Brief Description of Drawings

Fig. 1 is a block diagram of an example device, according to an embodiment, communicatively coupled to a further device.

Fig. 2A is a state diagram of an example device that is reliable and pivot.

Fig. 2B is a state diagram of a further example device that is reliable and retriable.

Fig. 2C is a state diagram of a further example device that is reliable and compensatable.

Fig. 2D is a state diagram of a further example device that is reliable, retriable and compensatable.

Fig. 2E is a state diagram of a further example device that is unreliable and pivot.

Fig. 2F is a state diagram of a further example device that is unreliable and retriable.

Fig. 2G is a state diagram of a further example device that is unreliable and compensatable.

Fig. 2H is a state diagram of a further example device that is unreliable, retriable and compensatable.

Fig. 3 is a diagram of an example task and terminal states that may be reached by the example task.

Fig. 4A is diagram of an example device, according to an embodiment, registering a further device.

Fig. 4B is diagram of an example device, according to an embodiment, activating a further device.

Fig. 4C is diagram of an example device, according to an embodiment, sending a leave message to a further device.

Fig. 5 is an example of a coordination hierarchy including five example devices.

Fig. 6A is an example of a message flow between five example devices contributing to a composite service.

Fig. 6B is a further example of a message flow between five example devices encountering a failure.

Fig. 7A is a schematic diagram of an example workflow.

Fig. 7B is a table of example sets of termination states reachable by tasks of the example workflow.

Fig. 7C is a table of example devices with transactional properties.

Fig. 7D is a table of example sets of acceptable termination states of the example workflow.

Fig. 7E is a table of sets of termination states reachable by devices assigned to fulfill the tasks of the example workflow.

Fig. 8 is a flow diagram of an example method according to an embodiment.

Fig. 9 is a block diagram of an example computer program product according to an embodiment.

### Detailed Description

A composite service may include two or more tasks. Different devices may be available to fulfill the tasks of the composite service. The different devices may have different transactional properties. A composite service may provide a consistency and flexibility by facilitating an execution of the composite service that is consistent and flexible. A consistent execution of the composite service may for example mean that the execution terminates in a consistent state. A flexible execution of the composite service may for example mean that requirements for transactional properties of a device contributing to the execution are relaxed. As an example, a relaxed requirement may allow for using a device that can potentially fail. A flexible execution of the composite service may further mean that the composite service may be used universally and efficiently in different situations, for example, for different hardware configurations.

An example embodiment includes a device for contributing to an execution of a composite service. The device may be configured to fulfill a task of the composite service and determine a further device to fulfill a further task of the composite service. Furthermore, the device may be configured to send data to the further device so that the further device may execute the further task of the composite service.

The device may allow for a consistent execution of the composite service because the device may take into account a transactional property of the further device to ensure that the execution terminates with a consistent state. The device may allow for a flexible execution because the device may use a specific requirement for the further device so that the execution terminates in a consistent state. The specific requirement may be more relaxed and provide more flexibility than a general requirement that may for example be that devices fulfilling a task may not fail. Furthermore, the device may take into account a transactional property of a device already assigned to fulfill a task of the composite service. Furthermore, the device may take into account a termination state of a device already finished executing a task of the composite service. Furthermore, the device may take into account newly available devices. The device may be efficient and saving communication bandwidth because the device may rely on update data about availabilities and transactional properties of further devices.

Such an independent and self-consistent execution of the composite service may allow for using the composite service universally and efficiently in different situations by reducing a dependence on further systems not fulfilling a task. Reducing a number of further systems not fulfilling a task may also reduce required communication bandwidth and computing resources. This may further reduce overhead computations related to communication and reliance on the further systems.

A further example embodiment includes a method for contributing to an execution of a composite service. The method includes determining the further device and sending the task data. The method may provide a consistent and flexible execution of the composite service. Furthermore, the method may be efficient, saving bandwidth, and secure because the latest available data may be used for determining the further device.

A further example embodiment includes a computer program product for contributing to an execution of the composite service. The computer program product may provide a consistent, flexible, efficient, saving bandwidth, and secure execution of the composite service.

The following description of examples includes details for illustrating embodiments and is not intended to limit the scope of the embodiments or to be exhaustive. For purposes of explanation, specific details are set forth in order to provide a thorough understanding of example embodiments. A person skilled in the art may appreciate that further embodiments may be practiced with details that differ from the specific details.

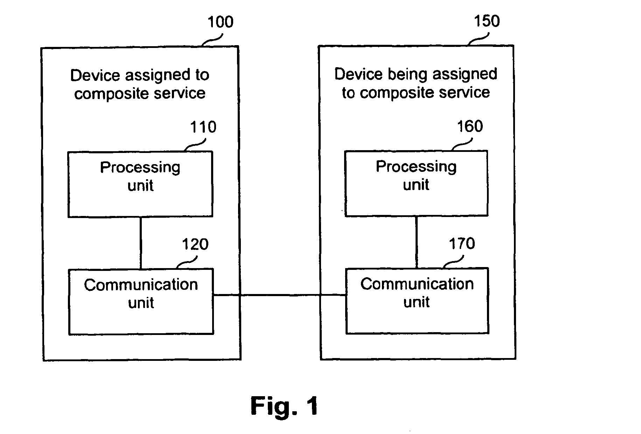

Fig. 1 is a block diagram of an example device 100, according to an embodiment, communicatively coupled to a further device 150. The example device 100 assigned to a composite service may for example have been assigned previously by a different device to fulfill a task of the composite service. The example device 100 assigned to the composite service includes a processing unit 110 and a communication unit 120. The further device 150 being assigned to the composite service includes a processing unit 160 and a communication unit 170. In an example, the further device 150 may not yet have been assigned to the composite service and may be assigned to the composite service by the example device 100. Lines between elements of the figure represent a communicative coupling between the elements to exchange data in either direction.

The device 100 may include a computer system and an operating system program and an application program that is hosted on the computer system. The computer system may for example be an application server, an Internet server, a PC, or a network of servers. The computer system may include a hard disc drive and a random access memory (RAM) for storing and retrieving data for the processing unit 110. The application program may include instructions that may be executed by the computer system and configure the computer system to become the device 100. Therefore, the device 100 may be able to provide a service that fulfills a task of the composite service. The processing unit 110 may for example be a central processing unit (CPU) that is coupled to the communication unit 120. The communication unit 120 may include an interface to the Internet to exchange data or to provide for example a web service to other Internet servers. In a further example, the communication unit 120 may include a part of an intranet of a company that is accessible by servers connected to the intranet.

In an example, the further device 150 may include a computer system hosting an application program. The further device 150 may have structural elements similar or identical to the device 100 and may differ from the device 100 by the application program.

The device 100 may be assigned to fulfill a task of a composite service. The processing unit 110 may be configured to determine the further device 150 to fulfill a further task of the composite service. To determine the further device 150 may include identifying the further device or computing an identifier of the further device based on predefined rules. The further device 150 may have a transactional property that complies with a transactional requirement of the composite service. The communication unit 120 of the device 100 may be configured to send task data to the further device. The task data may include input data to fulfill the further task. In an example, the task data may include data that may be required by the further device for data processing in accordance with the further task. Furthermore, the task data may include administrative data such as an identifier of the composite service, an identifier of the further device, and a specification of the further task. In an example, the task data may also include an identifier of a following device that has been determined to fulfill a following task of the composite service. Therefore, the device 100 may be configured to independently manage an execution of the composite service or a part of the composite service.

Furthermore, the processing unit 110 may be configured to determine the further device by accessing and using sets of acceptable termination states (ATS). The sets of the ATS represent the transactional requirement of the composite service. Therefore, an execution of the composite service may be defined as being consistent when the execution terminates in a state that is in accordance with a set of the ATS. One set of the ATS may specify a termination state for each task of the composite service. The sets of the ATS may be created at design time by a developer of the composite service to specify termination states that are consistent. The sets of the ATS may for example depend on the tasks of the composite service or on contracts between different providers of devices that may potentially fulfill a task of the composite service.

The processing unit 110 may sequentially determine more than one device to fulfill a task of the composite service and may compute an intermediate condition using a transactional property of a previously assigned device. The intermediate condition may take into account a dependency between termination states of different tasks according to the sets of the ATS. Together, the previously assigned device and the dependency may imply requirements for the further device that are specified by the intermediate conditions. As an example, a transactional requirement of the composite service having a first task and a second task may allow for a failure of the second task in the event that a result of the first task is compensated. Therefore, a device that is assigned to the second task and that may terminate in a failed state may imply that a device determined to fulfill the first task may be required to be compensated. However, a further device that is assigned to the second task and may not be able to terminate in a failed state may not require that a device determined to fulfill the first task may be compensated.

The processing unit 110 may compute a condition for the transactional property of the further device. The condition for the transactional property may include the intermediate condition computed using one or more previously determined devices and the sets of the ATS.

The communication unit 120 may coordinate the further device which may include managing the communication of the further device. Coordination of the further device may include sending registration data to the further device to check an availability of the further device. Furthermore, coordination may include sending activation data to activate the further device to fulfill the further task. Furthermore, coordination may include maintaining an open connection channel to receive a message that the further device completed the further task. Furthermore, coordination may include sending leave message data to the further device in response to the message that the further device completed the further task. The leave message data may indicate that the further device is released from contributing to the composite service. Therefore, the further device may be able to use processing resources and communication resources to fulfill different tasks.

In an example, the device and the further device may be parts of a coordination hierarchy. The coordination hierarchy may include a coordinating device that coordinates a following device and a subcoordinating device that is coordinated by a coordinating device. The subcoordinating device may further be specified by modifying external data of the composite service. External data may be data that is stored externally with regard to the composite service. Therefore, external data remains relevant even following a termination of an execution of the composite service. Frequently, external data may be sensitive data or nonvolatile data and it may be desirable to conserve an integrity of the external data. The coordination hierarchy may include a coordinated device that modifies internal data of the composite service. Internal data may include volatile or mobile data that may be transferred from one device to a following device during an execution of the composite service. Internal data may be related to an instance of the composite service and an integrity of the internal data may have a lower priority than an integrity of the external data. A device contributing to the composite service may have and provide a backup copy of received internal data. A differentiation between external data and internal data may be used to determine the sets of the ATS. In an example, the device 100 may be a coordinating device or a subcoordinating device and the further device 150 may be a subcoordinating device or coordinated device.

In an example, the processing unit 110 may be configured to determine the further device to replace a previous device. The previous device may have been assigned previously to fulfill the further task and may have failed to be coordinated. A reason for a failure of the previous device to be coordinated may for example be a missing acknowledgement of a receiving of the registration data or not sending a completion message.

Transactional properties of devices may include many different features. As an example a property of the further device may include a hardware reliability evaluation of the further device. This may be used to specify a device because a hardware failure may have more severe consequences for the device than for example a software failure of the device from which the device may recover.

In an example, the composite service may be a critical zone that is a part of a further composite service. The critical zone may be specified by a requirement to provide a transactional consistency within the further composite service. In an example, the device 100 may be a device assigned to fulfill a first task of a set of tasks representing a critical zone. Upon execution of the first task the device 100 may determine devices to fulfill following tasks of the critical zone. Furthermore, the device 100 may coordinate the following tasks of the critical zone and determine a completion of the critical zone of the further composite service.

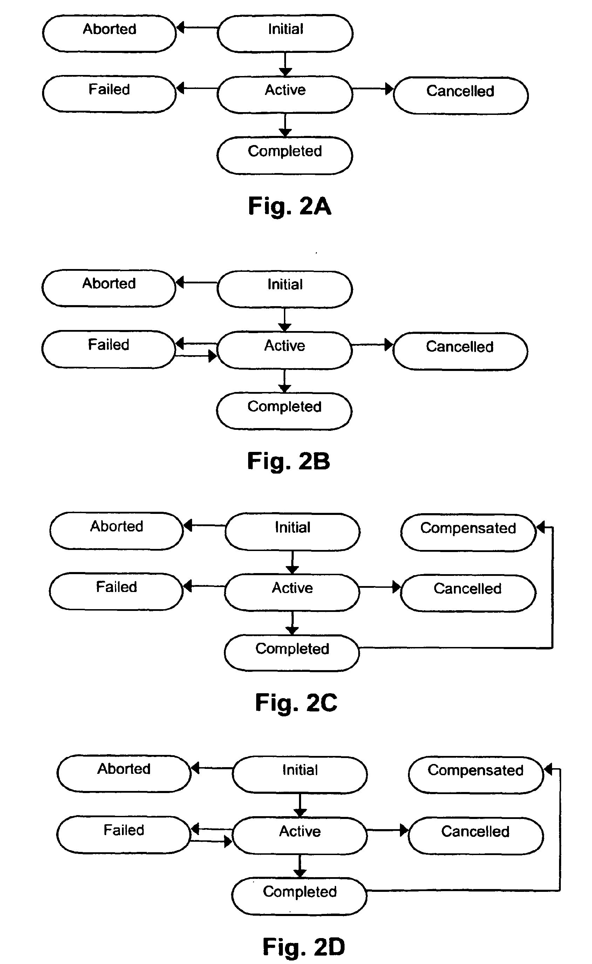

Fig. 2A is a state diagram of an example device that is reliable and pivot. In an example, a reliable device may be a device for which a hardware failure may be rare or not relevant. A pivot device may be a device that is not able to retry an execution of a task so that a failed execution may not be retried and that is not able to compensate a completed execution for example by rolling back data modifications. The state diagram is an example of a specification of a transactional property of a device. Following state diagrams specify further devices with different transactional properties. Furthermore, in an example, a reliable and pivot device may be a coordinating device, a subcoordinating device, or a coordinated device. This may be true also for devices having transactional properties of following state diagrams.

Accordingly, from the initial state the device may reach the states active and aborted. An aborted state may be reached when the device is not started due for example to a respective coordination message. The coordination message may have been sent to the device because a further device has failed previously. Coordination messages may be part of a coordination protocol to coordinate the execution of the composite service at runtime. From the active state the state cancelled may be reached for example as a result of receiving a respective coordination message. From the active state, the state failed may be reached due to, for example, a problem of an application program of the device. From the active state, the state completed may be reached for example when the execution of the task by the device is finished without problems.

Fig. 2B is a state diagram of a further example device that is reliable and retriable. Compared to a reliable and pivot device, a reliable and retriable device may have a further transition from the state failed to the state active. In an example, a retriable device may retry to execute the task many times until the execution of the task is cancelled by a coordination message or completed. Therefore, failed may not be an accessible termination state of a reliable and retriable device.

Fig. 2C is a state diagram of a further example device that is reliable and compensatable. Accordingly, a reliable and a compensatable device may have a transition from the state completed to the state compensated. Such a transition to the state compensated may be in response to receiving a respective coordination message. A reliable and compensatable device may be able to roll back each modification of external data and provide a copy of the internal data received prior to starting an execution of the task.

Fig. 2D is a state diagram of a further example device that is reliable, retriable and compensatable. Accordingly, such a device has a transition from the state failed to the state active and from the state completed to the state compensated. Such a device may be useful in a coordination protocol because it may be able to react in a flexible way to different coordination messages that are received in response to results of further devices.

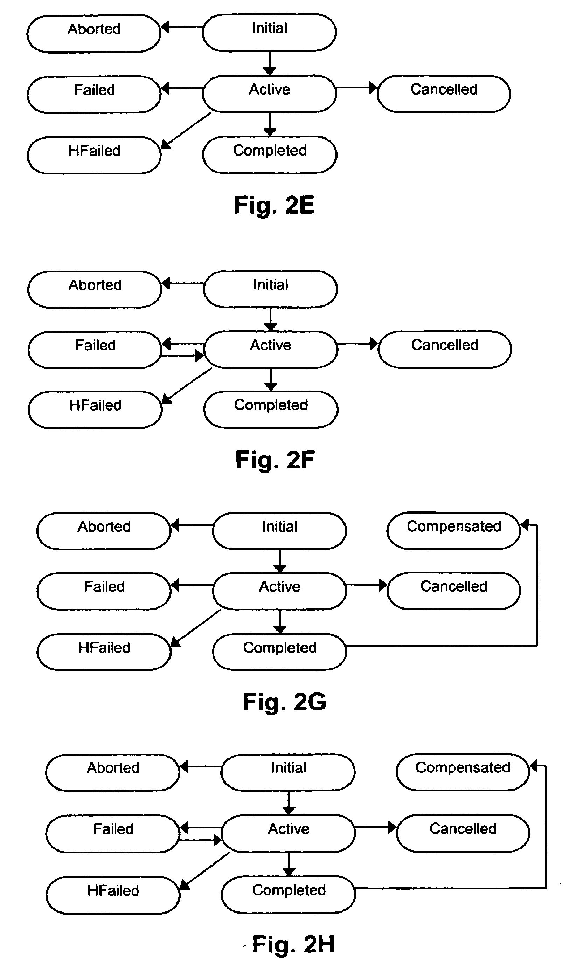

Fig. 2E is a state diagram of a further example device that is unreliable and pivot. Accordingly, an unreliable and pivot device may have a further state HFailed and a further transition from the state active to the state HFailed compared to a reliable and pivot device. The state HFailed may be obtained encountering a hardware failure from which a recovery may not be possible and which may not allow any response to a coordination message.

Fig. 2F is a state diagram of a further example device that is unreliable and retriable. Compared to an unreliable and pivot device, an unreliable and retriable device may have a further state HFailed and a further transition from the state active to the state HFailed compared to a reliable and retriable device.

Fig. 2G is a state diagram of a further example device that is unreliable and compensatable. Accordingly, an unreliable and compensatable device may have a further state HFailed and a further transition from the state active to the state HFailed compared to a reliable and compensatable device.

Fig. 2H is a state diagram of a further example device that is unreliable, retriable, and compensatable. Accordingly, an unreliable, retriable, and compensatable device may have a further state HFailed and a further transition from the state active to the state HFailed compared to an unreliable, retriable, and compensatable device.

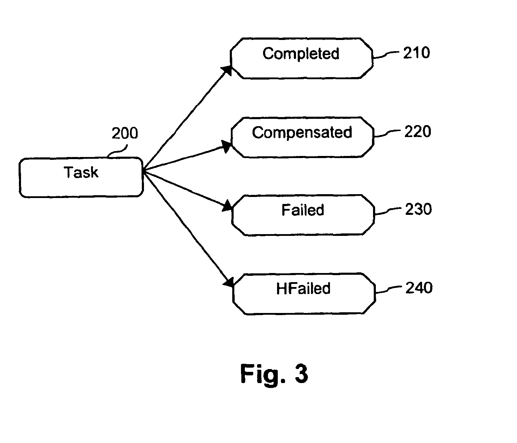

Fig. 3 is a diagram of an example task 200 and terminal states that may be reached by the example task 200. Terminal states of an example task may be used to describe sets of acceptable termination states (ATS) of a composite service. Therefore, terminal states of a task may not be applied to describe an execution of a task but to describe a task prior to an execution of the task.

The example task 200 may reach a terminal state completed 210 representing a completion of the task. The example task 200 may reach a terminal state compensated 220 representing a state in which data modifications have been taken back. The example task 200 may reach a terminal state failed 230 representing for example a less severe failure that still allows for sending and receiving coordination messages. The example task 200 may reach a terminal state HFailed 240 from which there may be no recovery and which may mean to a complete inability to participate in a coordination protocol.

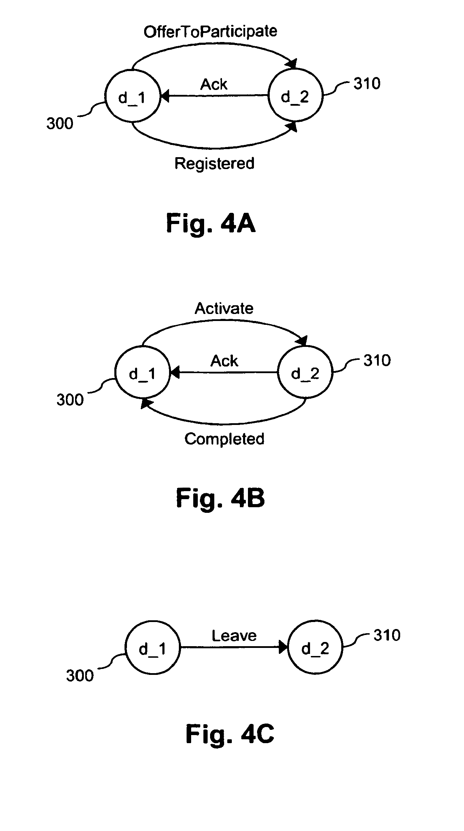

Fig. 4A is diagram of an example device 300, according to an embodiment, registering a further device 310. In an example, the device 300 may be a first device of a composite service that determines and registers devices to fulfill tasks of the composite service. In an example, the device 300 may send further coordination messages to the further device 310. In a further example, the device 300 may be a coordinating device and may send registration data to the further device 310 that may receive further coordination messages from a subcoordinating device different from the device 300.

The device 300 may send an initial message OfferToParticipate that may for example include data specifying the operation to which the further device 300 is asked to commit. The message OfferToParticipate may further include an identifier of the composite service which may be used for further coordination messages. In response to the message OfferToParticipate, the further device 310 may send a message Ack that may represent an acknowledgement of a participation in the composite service and may include the identifier of the composite service. In response to the message Ack, the device 300 may send a message Registered that confirms the registration of the further device 310 to the composite service. In an example, the message Registered may include the identifier of the composite service and an identifier of a device that coordinates the further device 310. Registration data may include data of the message OfferToParticipate and data of the message Registered and in a further example, the registration data may be sent in a single message from the device 300 to the further device 310. In a still further example, a part of the data of the message OfferToParticipate and a part of the data of the message Registered may be a part of the task data sent to the further device that has been determined.

Fig. 4B is diagram of an example device 300, according to an embodiment, activating a further device 310. In a further example, the further device 310 may be activated for example by a subcoordinating device that is different from the device 300. In an example, device 300 may send the message Activate with activation data that includes the identifier of the composite service, a specification of the composite service and identifier of the task to be executed. The activation data may further include the composite service data that may be required to fulfill the task and that may be modified during the execution of the composite service. In an example, the activation data may further include an identifier of a following device assigned to fulfill a following task of the composite service. Therefore, the device receiving the activation data may activate the following device after having fulfilled the task. In an example, the activation data or a part of the activation data may be a part of the task data sent to the further device that has been determined. The further device 310 may send a message Ack that acknowledges receiving the message Activate and that may include the identifier of the composite service. Following a completion of the execution of the task the further device 310 may send a message Completed to the device 300. The message Completed may include the identifier of the task and the identifier of the composite service.

Fig. 4C is diagram of an example device 300, according to an embodiment, sending a leave message to a further device 310. In response to receiving a completion message from the further device the device 300 may have determined that a contribution of the further device to the composite service may not be required and accordingly send a message Leave. The message Leave may include the identifier of the composite service. In an example, following the message Leave the further device 310 may not be used to contribute further to the composite service, or for compensating a result in response to a failed device. Following the message Leave the further device 310 may commit to contribute to further composite services.

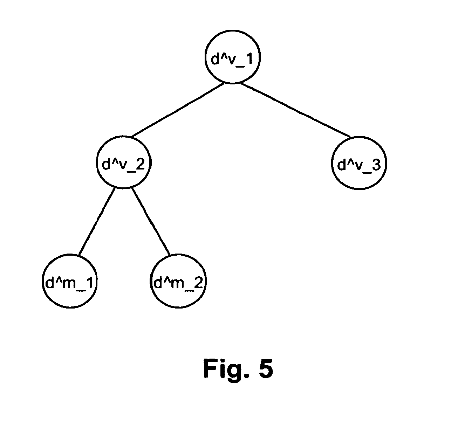

Fig. 5 is an example of a coordination hierarchy including five example devices. In an example, the five example devices d^v_1, d^v_2, d^v_3, d^m_1, and d^m_2 are assigned to a composite service. The coordinating device is device d^v_1 that modifies external data of the composite service, as indicated by the v. Device d^v_1 may have registered the further devices of the coordination hierarchy and may send further coordination messages to device d^v_2 and device d^v_3, each of which modifies external data. In an example, device d^v_2 is a subcoordinating device that may send further coordination messages including activation data and leave messages to coordinated device d^m_1 and coordinated device d^m_2. In a further example, each coordination message may be sent by the coordinating device d^v_1.

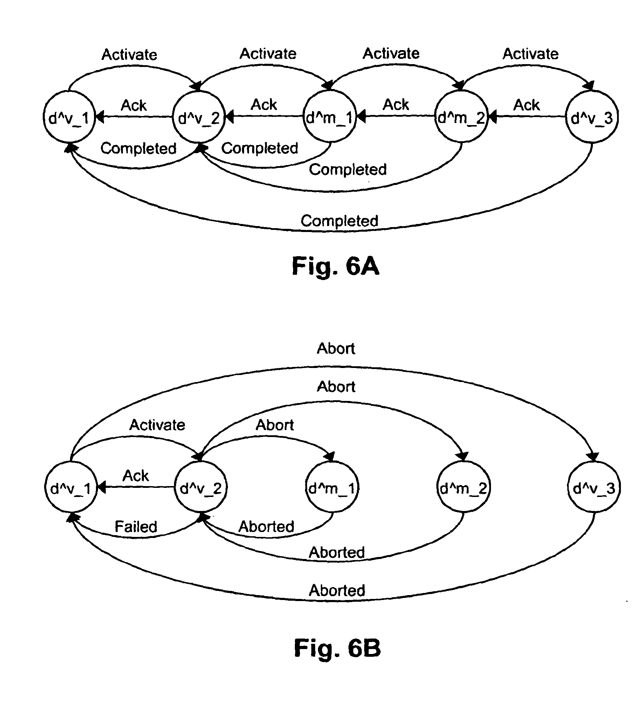

Fig. 6A is an example of a message flow between five example devices contributing to a composite service. The five devices d^v_1, d^v_2, d^v_3, d^m_1, and d^m_2 may be in accordance to a coordination hierarchy (see Fig. 5). The message flow may be an example of a normal execution of a composite service which does not encounter a failure.

In the example, the coordinating device d^v_1 has registered previously further devices and the message flow starts with a first activation message from the device d^v_1 to device d^v_2. In response to the first activation message the device d^v_2 sends an acknowledge message and, following completion of an execution of a task, a completion message to device d^v_1 and an activation message to device d^m_1. In response to the activation message the device d^m_1 sends an acknowledge message and, following completion of an execution of a task, a completion message to device d^v_2 and an activation message to device d^m_ 2. In response to the activation message the device d^m_2 sends an acknowledge message and, following completion of an execution of a task, a completion message to device d^v_2 and an activation message to device d^v_3. In response to the activation message the device d^v_3 sends an acknowledge message and, following completion of an execution of a task, a completion message to device d^v_1.

Fig. 6B is a further example of a message flow between five example devices encountering a failure. The message flow starts with a first activation message from the device d^v_1 to device d^v_2. In response to the first activation message the device d^v_2 sends an acknowledge message and then encounters a failure during a following execution of a task. In an example, the failure may not be fatal so that device d^v_2 is still able to send a message Failed to device d^v_1. Furthermore, device d^v_2 may send a message Abort to device d^m_1 and device d^m 2, each of which replies with a message Aborted to confirm an abortion of an execution of respective tasks. Device d^v_1 may send an abortion message to device d^v_3 which replies with a message Aborted to device d^v_1.

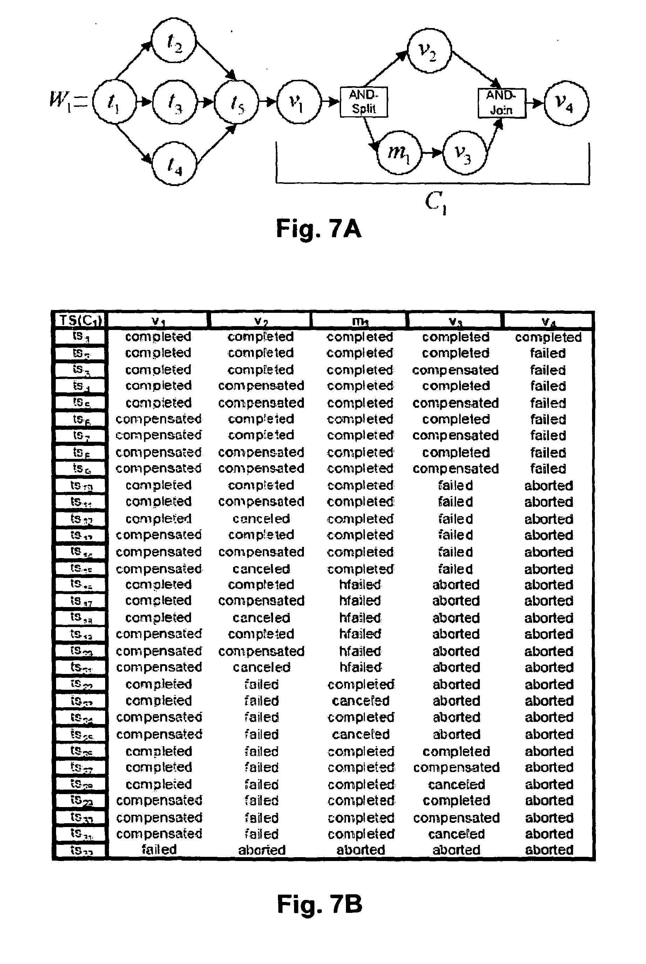

Fig. 7A is a schematic diagram of an example workflow W₁. The workflow W₁ is an example of a composite service. The workflow W₁ has ten tasks represented by the vertices: t₁, t₂, t₃, t₄, t₅, v₁, v₂, m₁, v₃, and v₄. The tasks represented by the vertices v₁, v₂, m₁, v₃, and v₄ are part of a critical zone C₁ for which a consistent termination state may be required. In the example, the vertices v₁, v₂, v₃, and v₄ represent tasks that include a modification of external data and the vertex m₁ represents a task that includes a modification of internal data.

The exemplary workflow W₁ may be a workflow of an online electronic purchasing system with which clients, retailers, and hardware providers may exchange orders and invoices. The workflow W₁ may include the task t₁ that represents a call for an offer of a client to three retailers in the purchasing system. Each one of the three retailers has a task to make an offer represented by vertices t₂, t₃, and t₄. In the example, vertex t₅ represents a task of the client to contact the selected retailer and vertex v₁ represents a task of the selected retailer to send an invoice to the client and to contact a hardware provider. Vertex v₁ initiates the critical zone C₁ which may continue with a task that is represented by vertex v₂ and that includes the client paying the selected retailer using a trusted payment platform. A parallel branch may include a task represented by vertex m₁ that includes the hardware provider sending an online invoice to the selected retailer. The parallel branch may further include a task represented by vertex v₃ that includes the selected retailer paying the invoice of the hardware provider. Vertex v₄ may represent a task including the hardware provider shipping the purchased product to the client.

Fig. 7B is a table of example sets of termination states TS(C₁) reachable by tasks of the example workflow W₁. The tasks of the example workflow W₁ are the tasks of the critical zone C₁. Lines of the table of the sets of termination states represent a possible termination state of each of the tasks of the critical zone C₁.

In an example, the tasks represented by tasks v₁, v₂, v₃, and v₄ may not be expected to terminate with a hardware failure. A hardware failure may only be taken into account as a termination state of the task m₁. In the example, each task is executed by one device; however, in further examples one or more tasks may also be executed by one or more devices.

In an example, the possible termination states of the tasks of the critical zone may be a basis for selecting acceptable termination states (ATS) that represent a consistent execution of the critical zone.

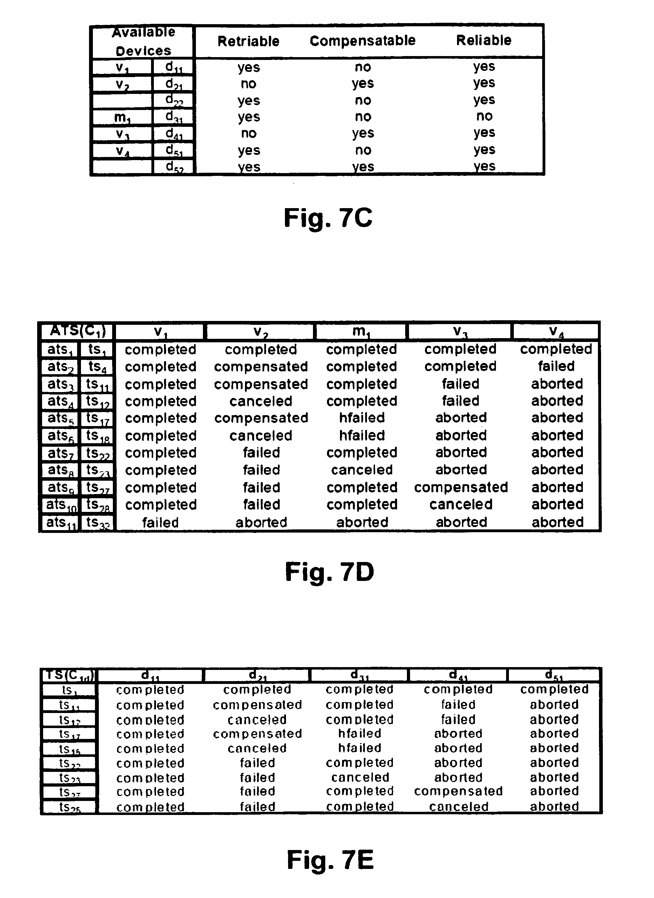

Fig. 7C is a table of example devices with transactional properties. For each task of the critical zone at least one device is configured to fulfill the task according to for example functional requirements. As an example, the task v₂ may be fulfilled by the devices d₂₁ or d₂₂. Transactional properties of the available devices are specified by indicating if an available device is retriable, compensatable, or reliable. The available devices may have been found by a discovery procedure based on functional properties of the devices.

The transactional properties of the devices, for example retriable, compensatable, and reliable, may be specified in a different format by specifying termination states that are accessible by the devices. The different format using the accessible termination states may follow from states diagrams of devices (see Fig. 2A to Fig. 2H). The different format may be used to determine devices because the different format allows for a formally equivalent treatment of transactional properties of the devices and transactional requirements for devices.

In an example, a formal description of a workflow W including a set of n tasks may be represented by W = (t_a) a ∈ [1,n]. An execution of the workflow W which may also be called an instance W_s of the workflow may include a set of n devices and may be represent by W_s = (d_a) a ∈ [1,n]. A procedure to assign devices to tasks based on transactional requirements and transactional properties may follow a similar strategy as the one based on functional requirements and functional properties. It may be a match-making procedure between the transactional properties offered by devices and the transactional requirements associated to each task. The coordination protocol may be based on rules deduced from the transactional requirements and the transactional properties of previously assigned devices.

To express requirements and properties of devices possible termination states of the devices may be used. For this an operator may be defined, termination state ts(x), to specify the possible termination states of an element x. The element x may be a device and accordingly ts(d) ∈ {aborted, cancelled, failed, hfailed, completed, compensated}. The element x may be a task t and ts(t) ∈ {aborted, cancelled, failed, hfailed, completed, compensated}. The element x can be a workflow composed of n tasks W = (t_a) a ∈ [1,n] and ts(W) = (ts(t_1), ts(t_2), ..., ts(t_n)). The element x can be an instance W_s of the workflow composed of n devices W_s = (d_a) a ∈ [1,n] and ts(W_s) =(ts(d_1), ts(d_2), ..., ts(d_n)). The operator TS(x) may represent a finite set of all possible termination states of the element x. It may be followed that TS(W_ s) is a subset of TS(W) since the set TS(W_s) represents the actual termination states that can be reached by W_s according to the transactional properties of the devices assigned to tasks of W. It may be further defined for x being a workflow or composite service and a ∈ [1, n]: ts(x, t_a), that is, the value of ts(t_a) in ts(x) and tscomp(x), that is, the termination state of x such that for all a ∈ [1, n] it is ts(x, ta) = completed.

Fig. 7D is a table of example sets of acceptable termination states of the example workflow. A line of the table represents a set of acceptable termination states (ATS) of the tasks. The lines are enumerated and according to the table of Fig. 7D there are eleven sets of acceptable termination states. In each line there is a further identification of the set of possible termination states to which the line may be equal. In an example, the table of sets of ATS of workflow W represents valid sets of ATS of the workflow W, that is, ATS(W).

In an example, the ATS(W) may be obtained by selecting the termination states of the table TS(W) that are consistent and respect the validity rule for the created ATS(W). Table ATS(C₁) of Fig. 7D is an example of the ATS(W) and table TS(C₁) (see Fig. 7B) is an example of the table TS(W). The ATS may be used as a consistency evaluation tool for the workflow. ATS define the termination states a workflow is allowed to reach so that its execution is judged consistent. ATS(W) may be defined as a subset of TS(W) whose elements are considered to be consistent by workflow designers. ATS(W) may be identified with the transactional requirements of the tasks. A consistent termination state of W is called an acceptable termination state ats_k(W) and we note ATS(W) = (ats_k(W)) k ∈ [1,i]. The set TS(W) (see Fig. 7B) and ATS(W) can be represented by tables that define for each termination state the tuple of termination states reached by the workflow task W. A specification of the set ATS(W) may be done at the workflow designing phase. ATS(W) may be used as a decision table for a coordination protocol so that W_s can reach an acceptable termination state knowing the termination state of at least one task.

The role of a coordination protocol may consist in sending messages to services in order to reach a consistent termination state given the current state of the workflow execution. A unique coordination decision, for example the termination state that may be reached, may be made when a state of the workflow execution is unique. A coordination protocol may be characterized by having a unique strategy. Therefore, ATS(W) that may be used as input for the coordination decision-making process has to verify some properties. Because ATS(W) is a subset of TS(W) and ATS(W) inherits the characteristics of TS(W) TS(W) is analyzed first. First basic properties of TS(W) may be derived from inherent execution rules of a workflow W prior to examining TS(W) from a coordination perspective.

Basic properties of elements of TS(W) may be derived from the transactional model presented previously. TS(W) is the set of all possible termination states of W based on the termination states model of the devices. Within a task execution it may not be possible to reach all the combinations represented by a n-tuple (ts(t_1), ts(t_2), ..., ts(t_n)) assuming that for all a ∈ [1,n] it is ts(t_a) ∈ {aborted, cancelled, failed, hfailed, completed, compensated}. A first restriction (P1) follows from a sequential aspect of a workflow: a task becomes activated in case that tasks executed previously according to the execution plan of W have reached the state completed. (P1) means that to start the execution of a workflow task it may be required that previously workflow tasks have been completed properly. In the following it is assumed that only a single task may fail at a time and that the states aborted, compensated and cancelled can be reached by a task in a given ts_k(W) in case one of the devices executing a task of W has failed or hardware failed (hfailed). This means that the coordination protocol may be allowed to force the abortion, the compensation or the cancellation in case of failure of a device. A second restriction (P2) is: in case that there exist a and k ∈ [1, n] × [1, j] such that ts_k(W, t_a) ∈ {compensated, aborted, cancelled} it follows that there exists exactly one l ∈ [1, n] such that ts_k(W, t_l) ∈ {failed, hfailed}.

In an example, a uniqueness of the coordination decision during the execution of a coordination protocol may be a requirement. The elements of TS(W) may be identified that correspond to different coordination decisions given the same state of a workflow execution. From this a classification, ATS(W) may then be determined. Using properties (P1) and (P2) an analysis of the state transition model may reveal that there are two situations where a coordination protocol has different possibilities of coordination given the state of a workflow task. Let a, b ∈ [1, n] and assume that the task t_b has failed or hfailed. A first situation is the task t_a is in the state completed and either it remains in this state or it is compensated. A second situation is the task t_a is in the state active and either it is cancelled or the coordinator let it reach the state completed.

Using the two situations an incompatibility from a coordination perspective and a flexibility may be defined. Let k, l ∈ [1, j], ts_k(W) and ts_l(W) are defined to be incompatible from a coordination perspective if and only if a,b ∈ [1, n] such that ts_k(W, t_a) = completed, ts_k(W, t_b) = ts_l(W, t_b) ∈ {failed, hfailed}, and ts_l(W, t_a) = compensated. Otherwise, ts_l(W) and ts_k(W) may be defined compatible from a coordination perspective. The value in {compensated, completed} reached by a task t_a in a termination state ts_k(W) with ts_k(W, t_b) ∈ {failed, hfailed} is called a recovery strategy of t_a against t_b in ts_k(W). From this follows a recovery strategy of a set of tasks against a given task. In the event that two termination states are compatible the termination state corresponds to the same recovery strategy against a given task.

Furthermore, let a, b ∈ [1, n], a task t_a is defined to be flexible against t_b, if and only if there exists a k ∈ [1, j] such that ts_k(W, t_b) ∈ {failed, hfailed} and ts_k(W, t_a) = cancelled. Such a termination state is defined to be flexible to t_a against t_b. The set of termination states of W flexible to t_a against t_b are represented by FTS(t_a, t_b).

From these definitions, the termination states of W may be studied according to the compatibility and flexibility criteria to identify the termination states that follow a common strategy of coordination. A further definition follows: let a ∈ [1, n], a termination state of W ts_k(W) is called a generator of t_a if and only if ts_k(W, t_a) ∈ {failed, hfailed} and for all b ∈ [1, n] with t_b is executed prior to or in parallel of t_a it is true that ts_k(W, t_b) ∈ {completed, compensated}. The set of termination states of W compatible with ts_k(W) being a generator of t_a is represented by CTS(ts_k(W), t_a). The set CTS(ts_k(W), t_a) specifies all the termination states of W that follow the same recovery strategy as ts_k(W) against t_a.

A further definition concerns a coordination strategy of an instance W_s: let ts_k(W) ∈ TS(W) and be a generator of t_a; coordinating an instance W_s of W in case of the failure of t_a consists in choosing the recovery strategy of each task of W against t_a and the z_a < n tasks (t_a_i) i ∈ [1,z_a] flexible to t_a whose execution is not cancelled when t_a fails. A coordination strategy of W_s against t_a is defined as a set CS(W_s, ts_k(W), (t_a_i) i e [1,z_a], t_a) = CTS(ts_k(W), t_a) - set union of FTS(t_a_i, t_a) i ranging from 1 to z_a. In a more formal description the equation may be expressed as CS(W_s, ts_k(W), (t_a_i) i ∈ [1,z_a], t_a) = CTS(ts_k(W), t_a) - Uᵢ₌₁^{i=z_a} FTS(t_a_i, t_a). In the event that a device d_a assigned to t_a is retriable it follows CS(W_s, ts_k(W), (t_a_i) i ∈ [1,z_a], t_a) is equal to an empty set. W_s is said to be coordinated according to CS(W_s, ts_k(W), (t_a_i) i ∈ [1,z_a], t_a) if in case of the failure of t_a, W_s reaches a termination state in CS(W_s, ts_k(W), (t_a_i) i ∈[1,z_a], t_a). This assumes that the transactional properties of W_s are sufficient to reach ts_k(W).

From the definitions a set of properties can be derived. One property is: W_s can only be coordinated according to a unique coordination strategy at a time. This may be followed from two termination states ts_k(W)and ts_l(W) that are a generator of t_a and are incompatible. A further property is: let a and k ∈ [1, n] × [1, j] such that ts_k(W, t_a) ∈ {failed, hfailed} but not generator of t_a. In case that ts_k(W) ∈ TS(W_s) it follows that there exists an l ∈ [1, j] such that ts_l(W) ∈ TS(W_s) is a generator of t_a compatible with ts_k(W).

Given a task t_a elements of TS(W) may be classified using the sets of termination states compatible with the generators of t_a. Using such an approach different recovery strategies and coordination strategies associated with the failure of t_a can be identified. At design time ATS(W), the termination states of W that are consistent may be defined. ATS(W) may be an input to a coordination protocol in order to provide the coordination protocol with a set of rules that leads to a unique coordination decision. According to definitions and properties rules for ATS(W) may be computed so that a uniqueness requirement of coordination decisions is respected.

For this, a valid ATS(W) is defined: let a and k ∈ [1, n] × [1, j] such that ts_k(W, t_a) ∈ {failed, hfailed} and ts_k(W) ∈ ATS(W); ATS(W) is defined to be valid if and only if there exists exactly one l ∈ [1, j] such that ts_ l(W) is a generator of t_a compatible with ts_k(W) and that (CTS(ts_l(W), t_a) - set union of FTS(t_a_i, t_a) i ranging from 1 to z_a) is a subset of ATS(W) for a set of tasks (t_a_i) i ∈ [1,z_a] that are flexible to t_a. The uniqueness of the termination state generator of a given task comes from the incompatibility definition and the uniqueness of the coordination strategy. A valid ATS(W) therefore contains for ts_k(W) in which a task fails a unique coordination strategy associated to the failure and the termination states contained in this coordination strategy are compatible with ts_k(W).

In such a way the ATS(C₁), the valid sets of acceptable termination states of the tasks of the critical zone, may be selected from the TS(C₁), the possible termination states of the tasks of the critical zone. Such a selection may be done by a workflow designer at design time to be used by a device, according to an example embodiment, during execution of a composite service.

Fig. 7E is a table of sets of termination states TS(C_{1d}) reachable by devices assigned to fulfill the tasks of the example workflow. The TS(C_{1d}) allow the device, according to an example embodiment, to determine the further device to fulfill the further task. In an example, the TS(C_{1d}) may have been computed prior to the device determining the further device starting an execution of the composite service. In this case, the device may determine or identify the further device by reading the further device from the table TS(C_{1d}). In a further example, the device may determine the further device by further computing the table TS(C_{1d}) as part of the execution of the composite service.

An assignment procedure may include assigning n devices to n tasks t_a and thus creating an instance W_s of W acceptable with respect to a valid ATS(W). Therefore the instantiation process of workflows may be a systematic method ensuring a transactional consistency of an obtained composite service.

First a validity criteria for the instance W_s is defined with respect to ATS(W). An instance W_s of W with respect to ATS(W) is defined to be acceptable if and only if TS(W_s) is a subset of ATS(W). The condition TS(W_s) being a subset of ATS(W) may be expressed in terms of coordination strategies. The termination state generator of t_a present in ATS(W) is noted ts_k_a (W). The set of tasks whose execution is not cancelled when t_a fails or hardware fails is noted (t_a_i) i ∈ [1,za]. It follows that TS(W_s) is a subset of ATS(W) if and only if for all a ∈ [1, n] it is CS(W_s, ts_k_a (W), (t_a_i) i ∈ [1,za], t_a) is a subset of ATS(W).

It may be further derived the following: let a and k ∈ [1, n] × [1, j] such that ts_k(W, t_a) ∈ {failed, hfailed} and ts_k(W) is an element of ATS(W); there exists an W_s that is an acceptable instance of W with respect to ATS(W) such that ts_k(W) ∈ TS(W_s) if and only if there exists l ∈ [1, j] such that ts_l(W) ∈ TS(W_s) is a generator of t_a compatible with ts_k(W) in ATS(W). The relation states that an ATS(W) allowing the failure of a given task can be used to coordinate a composite device also allowing a failure of the same task if and only if ATS(W) contains a complete coordination strategy associated to the task, that is, ATS(W) is valid.

In the following a procedure is described that may be used to assign services to tasks based on the transactional requirements. The procedure uses ATS(W) as a set of requirements during the service assignment procedure and selects the services with transactional properties that match the conditions for the services. The procedure is an iterative process, that is, services are assigned to tasks sequentially one after the other. The procedure therefore creates at each operation a partial instance of W noted W~i_s. A set TS(W~i_s) may be defined that represents the termination states of W that may be reached taking into account that i services are already assigned. Intuitively the acceptable termination states refer to the degree of flexibility offered when choosing the services with respect to the different coordination strategies verified in ATS(W).

The degree of flexibility is influenced by two parameters: a first parameter is the list of acceptable termination states for each workflow task. The list can be determined using ATS(W). The list is a direct requirement which specifies the termination states allowed for each task and therefore introduces requirements on the transactional properties of a device that is to be assigned to a given task. The device can only reach the states defined in ATS(W) for the considered task. The second parameter includes conditions for the services that come from the process being iterative. The conditions may change following each selection of a service because TS(W~i_s) changes. As an example, the termination states CTS(ts_k(W), t_a) allowing the failure of the task t_a may not be reachable following selection of a device that is retriable to t_a. In such a case, the states reached by other tasks in CTS(ts_k(W), t_a) may not be relevant and therefore there are no transactional requirements introduced for tasks to which services have not yet been assigned.

From the two parameters ATS(W, t_a) may be defined for a task t_a as being a set of acceptable termination states of t_a that are directly derived from ATS(W). In the example, ATS(W, t_a) may be identified with transactional conditions that a service selected for fulfilling task t_a is required to fulfill. Furthermore, DIS(t_a,W~i_s) may be defined as a set of requirements for a service assigned to t_a based on previous assignments. In the example, DIS(t_a,W~i_s) may be identified with the intermediate conditions that are derived from previously selected services. The set DIS(t_a,W~i_s) is determined based on the following reasoning: (DIS1), that is, the device is required to be compensatable if and only if compensated is an element of DIS(t_a,W~i_s); (DIS2), that is, a device is required to be retriable if and only if failed is not an element of DIS(t_a,W~i_s); and (DIS3), that is, the device is required to be reliable if and only if hfailed is not an element of DIS(t_a,W~i_s).

Using the two sets, ATS(W, t_a) and DIS(t_a,W~i_s), it may be possible to compute MinTP(d_a, t_a,W~i_s) = intersection of ATS(W, t_a) and DIS(t_a,W~i_s). MinTP(d_a, t_a,W~i_s) defines requirements that are related to conditions that a device d_a has at least to fulfill to be selected to the task t_a at the i+1 selection step. The retriability and compensatability properties for the set MinTP (d_a, t_a,W~i_s) may be checked: failed is not an element of MinTP (d_a, t_a,W~i_s) if and only if device d_a verifies the retriability property and compensated is an element of MinTP(d_a, t_a,W~i_s) if and only if device d_a verifies the compensatability property.

The set ATS(W, t_a) may be directly derived from ATS(W) by identifying the acceptable termination states of task t_a, for example, by searching the table of the ATS(W) and collecting the states from the respective column. A procedure for computing DIS(t_a,W~i_s) may involve more operations. As an example, it may be assumed that the procedure is at the i+1 step, that is, the current partial instance of W is W~i_s. Computing DIS(t_a,W~i_s) relates to determining if (DIS1), (DIS2), or (DIS3) may be true.

From the two statements three properties can be derived: a first property is that (DIS1) implies that state compensated can be reached by t_a. A second property is that (DIS2) implies that t_a cannot fail. A third property is that (DIS2) implies that t_a cannot be cancelled. A fourth property is that (DIS3) implies that t_a cannot hardware fail (hfail).

The two first properties may be directly derived from (DIS1) and (DIS2). The third property may be derived from the fact that if a task can not be cancelled when a task fails, then the task is required to finish the execution and to reach at least the state completed. In this case, if a service cannot be cancelled then the service cannot fail which is the third property.

D)S(t_a,W~i_s) may be computed by comparing t_a with each of the i tasks t_b being an element of W - {t_a} to which a device d_b has been selected. It is an iterative procedure and at the initialization phase, because no task has been yet compared to t_a, d_a can be pivot and DIS(t_a,W~i_s) = {failed, hfailed}.

The first property may be derived by proving that if t_b verifies that device d_b is not retriable and is assigned to t_b and there exists a ts_k(W) being an element of ATS(W) and being a generator of t_b such that ts_k(W, t_a) = compensated it follows that compensated is an element of DIS(t_a,W~i_s) The second property may be derived by proving that if t_b verifies that either device d_b not compensatable is assigned to t_b and there exists a ts_k(W) being an element of ATS(W) generator of t_a such that ts_k(W, t_b) = compensated or t_b is flexible to t_a and device d_b not retriable is assigned to t_b and for all ts_k(W) being an element of ATS(W) it is true that from ts_k(W, t_a) ∈ {failed, hfailed} and ts_k(W, t_b) ≠ cancelled it follows failed, hfailed ∉ DtS(t_a,W~i_s). The third property may be derived by proving that if t_b is flexible to t_a and verifies that device d_b not retriable is assigned to t_b and for all ts_k(W) being an element of ATS(W) it is true that ts_k(W, t_b) = failed and ts_k(W, t_a) ≠ cancelled it follows that failed, hfailed ∉ DIS(t_a,W~i_s).

The verification may stop in case that failed or hfailed is not an element of DIS(t_a,W~i_s) and compensated is an element of DIS(t_a,W~i_s). With MinTP (d_a, t_a,W~i_s) it is possible to select the appropriate device and to assign the selected device to a given task.

Services may be assigned to each workflow task based on an iterative process. In the operations three different scenarios can occur selecting a device for a task: in a first scenario a device that is retriable and compensatable may be available for a task modifying external data or a device that is reliable may be available for a task modifying internal data. A computation of the conditions may not be required because such a service matches the conditions. In a second scenario only devices that are pivot may be available for a task modifying external data or only devices that are unreliable may be available for a task modifying internal data. The conditions may be computed and in one case either pivot is sufficient or there is no solution, that is, the transactional requirement may not be fulfilled by the available devices. The conditions may be computed and in a further case an unreliable device may be sufficient or there is no solution given the available devices. In a third scenario devices that are retriable and devices that are compensatable may be available for a task modifying external data but no devices that are reiable and compensatable. The conditions may be computed and three cases may result. In a first case, retriability and compensatability may be required and accordingly there is no solution. In a second case, either retriability or compensatability may be required and an appropriate device that is retriable or device that is compensatable may be assigned to the task. In a third case the conditions may not be restrictive so that there is no requirement.

According to the cases the services verifying scenarios (i) and (ii) may be selected first because there is no flexibility in the choice of the devices. Following that devices verifying (iii) may be analyzed. In the example, the sequence conditions may be related to the scenarios (i), (ii), and (iii). The conditions may be that tasks for which devices are selected and that fulfill scenario (i) and (ii) are selected prior to tasks for which devices are selected and that fulfill scenario (iii).

Furthermore, tasks related to scenario (iii) for which the transactional requirements may exist may be selected prior to tasks related to scenario (iii) for which the transactional requirements may not exist. The transactional requirements of all the tasks for which devices are not yet selected are also affected and may be updated as a result of the current service selection. In case that no task has transactional requirements devices that are retriable may be assigned to the tasks to assure a completion of the remaining tasks' execution. It may finally follow that service selection procedure creates an instance of W that is acceptable with respect to a valid ATS(W).

For the coordination rules that are valid at runtime it may follow from an acceptable instance W_s with respect to ATS(W): for the tasks (t_a_i) i ∈ [1,n_r] to which no retriable devices have been assigned it is true that TS(W_s) = set union of {tscomp(Ws)} and the set union of (CTS(ts_k_a_i(W), t_a_i) - set union of FTS(t_a_i_j ,t_ a_ i)) i ranging from 1 to n_r and j ranging from 1 to z_a_i. In a formal description the equality may be expressed as TS(W_s) _ {tscomp(Ws)} U Uᵢ₌₁^{i=n-r} (CTS(ts_k_a_i(W), t_a_i) - Uⱼ₌₁^{j=z_a_i} FTS(t_a_i_j ,t_a_i)). Therefore from TS(W_s) the coordination rules associated to the execution of W_s may be executed.

Using the above procedure to select devices for fulfilling tasks of the workflow W, devices d₁₁, d₂₁, d₃₁, d₄₁, and d₅₁ may be determined to fulfill respectively the tasks represented by the vertices v₁, v₂, m₁, v₃, and v₄ of the critical zone C₁.

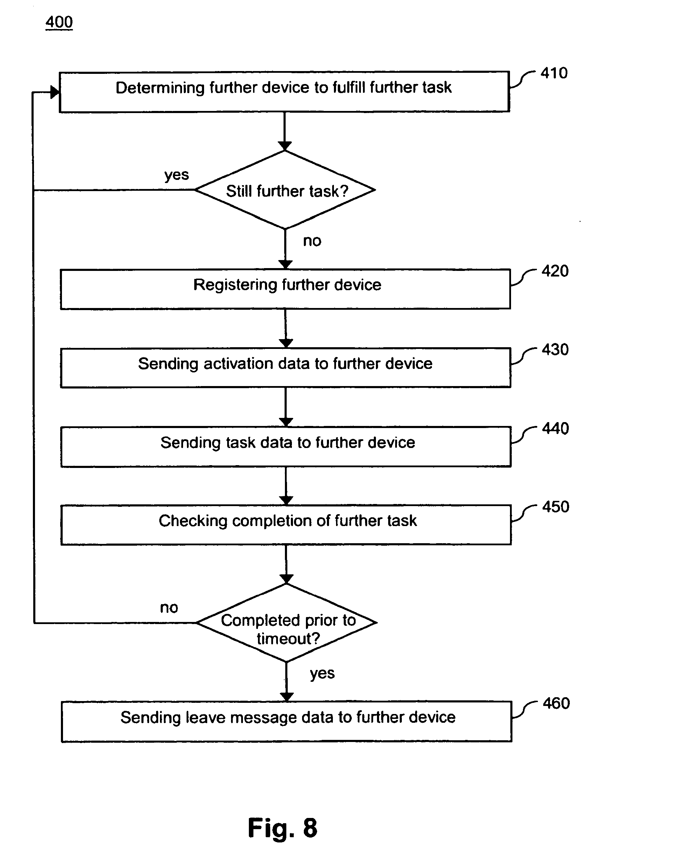

Fig. 8 is a flow diagram of an example method 400 according to an embodiment. In an example, the method 400 may be a computer-implemented method for fulfilling tasks of a composite service. The method 400 may be executed on a computer system, for example a device that has been assigned to fulfill a task of the composite service.

The method 400 may start with determining 410 a further device to fulfill a further task of the composite service. The further device may have a transactional property that complies with a transactional requirement of the composite service with respect to the further device. The transactional property may include a hardware reliability evaluation of the further device, for example, a distinction between reliable and unreliable. Determining 410 the further device may include accessing sets of acceptable termination states (ATS) that represent the transactional requirement of the composite service and computing an intermediate condition. A transactional property of a previously assigned device may be used to derive the intermediate condition, together with the ATS. Furthermore, determining 410 may include computing a condition for the transactional property of the further device. The condition for the transactional property may be used to select the further device from a set of devices with different transactional properties. Determining 410 the further device may be done to replace a previous device that has been assigned previously to fulfill the further task and that fails to be coordinated or to fulfill the further task.

A following operation of the method 400 may include a check if the composite service includes a further task for which no device has been determined. In case that such an uncovered task is found the method may continue with determining a device from the set of discovered devices to fulfill the uncovered task. In a further example, a method may check for an uncovered task at a later point of operation, for example, following a registering of the further device.

In an example, registering 420 the further device may follow as a part of a coordination protocol. Registering 420 the further device may be used to check an availability of the further device to fulfill the further task. Registering 420 may include sending one or more messages to the further device and receiving one or more messages from the further device. In a further example, the method may include repeating to determine further devices to fulfill further tasks in compliance with transactional requirements until devices have been determined for all tasks of the composite.

The method may include sending 430 activation data to the further device to activate the further device. Sending 430 the activation data may be a part of the coordination protocol. In response to receiving the activation data the further device may be configured to fulfill the further task. The activation data may be sent by the device executing the method 400 upon termination of the task execution. In a further example, the activation data may be sent by a previous device that has terminated a task of the composite service prior to the further task and that may be different from the device executing the method 400. In an example, the device may have determined many different devices to fulfill many different tasks and may send activation data to some of the many devices. Further devices that have been determined may receive activation data from prior devices that have fulfilled a prior task and that are different from the device determining the many devices.

The method 400 may include sending 440 task data to the further device with input data that may be required to fulfill the further task. The task data may include internal data of the composite service. The task data may also include an identifier of the further device and an identifier of a functionality required to fulfill the further task. Sending 440 the task data may be a part of the coordination protocol. In a further example, the device may send the activation data together with task data. The task data may include internal data that is modified by the device, the further device, or any other device assigned to a task of the composite service.

The method 400 may include checking 450 a completion of the further task by the further device. Checking 450 the activation data may be a part of the coordination protocol. Checking 450 may include waiting for a limited time for a message from the further device informing about a completion of the further task. The limited time may be determined by a time out that may be constant for the tasks of the composite service or that may vary with the tasks. According to the checking 450, the further task may not be completed prior to the time out in which case determining 410 a different device to fulfill the further task may follow. The different device may then replace the previously determined further device to fulfill the further task. In a further example, the operation determining 410 the different device to fulfill the further task may follow at any time that the further device does not respond within a limited time, fails to be coordinated in a further way, or fails to fulfill the further task. In a further example, a completion by a coordinated device may be checked by the device determining the coordinated device or by a further device that has sent activation data to the determined device and that is different from the determining device.

If the further task is completed prior to the time out a check may follow if a leave message may be sent to the further device. In an example, a leave message may be sent in case that the further device may not be required for a recovery strategy for a different device assigned to fulfill a different task of the composite service. Also, a leave message may be sent if compensated may not be a required or accessible state of the further device.

According to a result of the check, sending 460 leave message data to the further device may follow to indicate that the further device is released from contributing to the composite service.

In an example, the device and the further device may be parts of a coordination hierarchy. The coordination hierarchy may relate a coordinating device, a subcoordinating device, and a coordinated device. In an example, the device executing the method 400 may be a coordinating device and furthermore a first device of a critical zone. A critical zone may be a composite service that is a part of a further composite service and that may be required to provide transactional consistency within the further composite service.

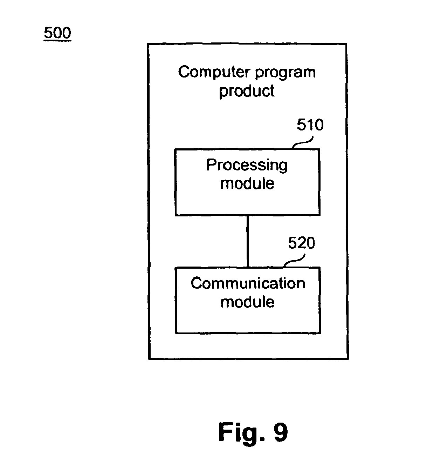

Fig. 9 is a block diagram of an example computer program product 500 according to an embodiment. The computer program product 500 may have instructions that are executable by a computer system that may for example be a device and that is assigned to fulfill a task of a composite service.

More specifically, the computer program product 500 may include a processing module 510 to determine a further device to fulfill a further task of the composite service. The further device may have one or more transactional properties that comply with one or more transactional requirements of the composite service.

Furthermore, computer program product 500 may include a communication module 520 to send task data to the further device. The task data may include input data to fulfill the further task.

As noted above, example embodiments within the scope of the present invention include computer program products. The computer program products may be stored on computer-readable media for carrying or having computer-executable instructions or data structures. Such computer-readable media may be any available media that can be accessed by a general purpose or special purpose computer. By way of example, such computer-readable media may include RAM, ROM, EPROM, EEPROM, CD-ROM or other optical disk storage, magnetic disk storage or other magnetic storage devices, or any other medium that may be used to carry or store desired program code in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is an example of a computer-readable medium. Combinations of the above are also to be included within the scope of computer-readable media. Computer-executable instructions include, for example, instructions and data which cause a general purpose computer, a special purpose computer, or a special purpose processing device to perform a certain function or group of functions. Furthermore, computer-executable instructions include, for example, instructions that have to be processed by a computer to transform the instructions into a format that is executable by a computer. The computer-executable instructions may be in a source format that is compiled or interpreted to obtain the instructions in the executable format. When the computer-executable instructions are transformed, a first computer may for example transform the computer-executable instructions into the executable format and a second computer may execute the transformed instructions. The computer-executable instructions may be organized in a modular way so that a part of the instructions may belong to one module and a further part of the instructions may belong to a further module. However, the differences between different modules may not be obvious and instructions of different modules may be intertwined.

Example embodiments have been described in the general context of method operations, which may be implemented in one embodiment by a computer program product including computer-executable instructions, such as program code, executed by computers in networked environments. Generally, program modules include for example routines, programs, objects, components, or data structures that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such operations.

Some embodiments may be operated in a networked environment using logical connections to one or more remote computers having processors. Logical connections may include for example a local area network (LAN) and a wide area network (WAN). The examples are presented here by way of example and not limitation. Such networking environments are commonplace in office-wide or enterprise-wide computer networks, intranets and the Internet. Those skilled in the art will appreciate that such network computing environments will typically encompass many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An example system for implementing the overall system or portions might include a general purpose computing device in the form of a conventional computer, including a processing unit, a system memory, and a system bus that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The drives and their associated computer-readable media provide nonvolatile storage of computer-executable instructions, data structures, program modules and other data for the computer.

Software and web implementations could be accomplished with standard programming techniques with rule based logic and other logic to accomplish the various database searching steps, correlation steps, comparison steps and decision steps. It should also be noted that the word "component" as used herein and in the claims is intended to encompass implementations using one or more lines of software code, hardware implementations, or equipment for receiving manual inputs.

A set of embodiments may be defined using combinations of features from different embodiments. In the following, embodiments of the set are enumerated:

1. A device assigned to fulfill a task of a composite service, the device comprising: a processing unit to determine a further device to fulfill a further task of the composite service using a transactional property of the further device, the transactional property complying with a transactional requirement of the composite service; and a communication unit to send task data to the further device, the task data comprising input data to fulfill the further task.

2. The device of point 1, the processing unit to determine the further device by: accessing sets of acceptable termination states that represent the transactional requirement of the composite service, computing an intermediate condition using a transactional property of a previously assigned device, and computing a condition for the transactional property of the further device.

3. The device of point 1, the communication unit further to coordinate the further device by sending registration data to the further device to check an availability of the further device.

4. The device of point 1, the communication unit to coordinate the further device by sending activation data to activate the further device to fulfill the further task and by maintaining an open connection channel to receive a message that the further device completed the further task.

5. The device of point 1, the communication unit further to send leave message data to the further device to indicate that the further device is released from contributing to the composite service.

6. The device of point 3 being coupled with the further device in accordance with a coordination hierarchy, the coordination hierarchy comprising a coordinating device to coordinate a following device, a subcoordinating device to be coordinated by a coordinating device and to modify external data of the composite service, and a coordinated device to modify internal data of the composite service.

7. The device of point 3, the processing unit being to determine the further device to replace a previous device that has been assigned previously to fulfill the further task and that fails to be coordinated.

8. The device of point 1, the transactional property of the further device including a hardware reliability evaluation of the further device.

9. The device of point 1, the composite service being a critical zone that is a part of a further composite service and that provides a transactional consistency within the further composite service.

10. A method executed by a device assigned to fulfill a task of a composite service, the method comprising: determining a further device to fulfill a further task of the composite service, the further device having a transactional property that complies with a transactional requirement of the composite service; and sending task data to the further device, the task data comprising input data to fulfill the further task.

11. The method of point 10, wherein determining the further device comprises accessing sets of acceptable termination states that represent the transactional requirement of the composite service, computing an intermediate condition using a transactional property of a previously assigned device, and computing a condition for the transactional property of the further device.

12. The method of point 10, further comprising coordinating the further device by registering the further device to check an availability of the further device

13. The method of point 10, wherein coordinating the further device comprises sending activation data to activate the further device to fulfill the further task and checking that the further device completed the further task.

14. The method of point 10, wherein coordinating the further device comprises sending leave message data to the further device to indicate that the further device is released from contributing to the composite service.

15. The method of point 12, wherein the device and the further device are parts of a coordination hierarchy, the coordination hierarchy comprising a coordinating device to coordinate a following device, a subcoordinating device to be coordinated by a coordinating device and to modify external data of the composite service, and a coordinated device to modify internal data of the composite service.

16. The method of point 12, wherein determining the further device comprises replacing a previous device that has been assigned previously to fulfill the further task and that fails to be coordinated.

17. The method of point 10, wherein the transactional property of the further device includes a hardware reliability evaluation of the further device.

18. The method of point 10, wherein the composite service is a critical zone that is a part of a further composite service and that provides transactional consistency within the further composite service.

19. A computer program product having instructions that are executable by a computer system that is assigned to fulfill a task of a composite service, the computer program product comprising instructions of: a processing module to determine a further device to fulfill a further task of the composite service, the further device having a transactional property that complies with a transactional requirement of the composite service; and a communication module to send task data to the further device, the task data comprising input data to fulfill the further task.

20. A device assigned to fulfill a task of a composite service, the device comprising: a first means for determining a further device to fulfill a further task of the composite service, the further device having a transactional property that complies with a transactional requirement of the composite service; and a second means for sending task data to the further device, the task data comprising input data to fulfill the further task.

## Claims

1. A device assigned to fulfill a task of a composite service, the composite service being described by a workflow having a plurality of tasks, the device comprising: a processing unit (110) configured to determine a further device (150) to fulfill a further task of the composite service, the further device being elected from at least one device that is configured to fulfill the further task according to functional requirements, using a transactional property of the further device, the transactional property being specified by a state diagram from which termination states that are accessible by the further device follow, by accessing and using sets of acceptable termination states of the composite service, the sets of acceptable termination states representing transactional requirements of the tasks corresponding to a transactional requirement of the composite service, one set of acceptable termination states specifying a termination state for each task of the composite service wherein an assignment of the further device to the further task is performed by a match-making procedure between the transactional property of the further device and the transactional requirement associated with the further task; and a communication unit (120) configured to send task data to the further device (150), the task data comprising input data to fulfill the further task.

2. The device according to claim 1, the communication unit is further configured to coordinate the further device (150) by sending registration data to the further device to check an availability of the further device.

3. The device according to any one of the claims 1 or 2, the communication unit (120) is configured to coordinate the further device (150) by being configured to send activation data to activate the further device (150) to fulfill the further task and to maintain an open connection channel to receive a message that the further device (150) completed the further task.

4. The device according to any one of the claims 1 to 3, the communication unit (120) is further configured to send leave message data to the further device (150) to indicate that the further device (150) is released from contributing to the composite service.

5. The device according to any one of the claims 2 to 4, wherein the device (100) is coupled to the further device (150) in accordance with a coordination hierarchy, the coordination hierarchy comprising a coordinating device that coordinates a following device, a subcoordinating device that is coordinated by a coordinating device and that modifies external data of the composite service, and a coordinated device that modifies internal data of the composite service.

6. The device according to any one of the claims 1 to 5, wherein the processing unit (110) is configured to determine the further device to replace a previous device that has been assigned previously to fulfill the further task and that fails to be coordinated.

7. The device according to any one of the claims 1 to 6, wherein the composite service is a critical zone that is a part of a further composite service and that provides a transactional consistency within the further composite service.

8. A method comprising a device (100) assigned to fulfill a task of a composite service, the composite service being described by a workflow having a plurality of tasks: determining a further device (150) to fulfill a further task of the composite service, the further device being elected from at least one device that is configured to fulfill the further task according to functional requirements and having a transactional property, the transactional property being specified by a state diagram from which termination states that are accessible by the further device follow; and sending task data to the further device, the task data comprising input data to fulfill the further task, wherein determining the further device comprises accessing and using sets of acceptable termination states of the composite service that represent transactional requirements of the tasks corresponding to a transactional requirement of the composite service, one set of acceptable termination states specifying a termination state for each task of the composite service and assigning the further device to the further task by performing a match-making procedure between the transactional property of the further device and the transactional requirement associated with the further task.

9. The method according to claim 8, the device further coordinating the further device by registering the further device to check an availability of the further device.

10. The method according to the claim 8 or 9, the device further coordinating the further device by sending activation data to activate the further device to fulfill the further task, and by checking that the further device completed the further task.

11. The method according to any one of the claims 8 to 10, the device coordinating the further device by further sending leave message data to the further device to indicate that the further device is released from contributing to the composite service.

12. The method according to any one of the claims 9 to 11, wherein the device and the further device are parts of a coordination hierarchy, the coordination hierarchy comprising a coordinating device that coordinates a following device, a subcoordinating device that is coordinated by a coordinating device and that modifies external data of the composite service, and a coordinated device that modifies internal data of the composite service.

13. The method according to any one of the claims 8 to 12, wherein the device determines the further device to replace a previous device that has been assigned previously to fulfill the further task and that fails to be coordinated.

14. The method according to any one of the claims 8 to 13, wherein the composite service is a critical zone that is a part of a further composite service and that provides transactional consistency within the further composite service.

15. A computer program product having instructions that are executable by a computer system assigned to fulfill a task of a composite service and that cause the computer system to execute operations of a method according to any one of the claims 8 to 14.

## Patentansprüche

1. Vorrichtung, die dazu bestimmt ist, eine Aufgabe eines zusammengesetzten Dienstes zu erfüllen, wobei der zusammengesetzte Dienst durch einen Arbeitsablauf mit einer Mehrzahl von Aufgaben beschrieben wird, wobei die Vorrichtung aufweist: eine Verarbeitungseinheit (110), die konfiguriert ist, um eine weitere Vorrichtung (150) zum Erfüllen einer weiteren Aufgabe des zusammengesetzten Dienstes zu bestimmen, wobei die weitere Vorrichtung aus mindestens einer Vorrichtung ausgewählt wird, die konfiguriert ist, um die weitere Aufgabe entsprechend Funktionsanforderungen unter Verwendung einer Transaktionseigenschaft der weiteren Vorrichtung zu erfüllen, wobei die Transaktionseigenschaft durch ein Zustandsdiagramm spezifiziert ist, aus dem sich Beendigungszustände ergeben, die für die weitere Vorrichtung zugänglich sind, indem auf Sätze annehmbarer Beendigungszustände des zusammengesetzten Dienstes zugegriffen wird und diese verwendet werden, wobei die Sätze annehmbarer Beendigungszustände Transaktionsanforderungen der Aufgaben darstellen, die einer Transaktionsanforderung des zusammengesetzten Dienstes entsprechen, wobei ein Satz annehmbarer Beendigungszustände einen Beendigungszustand für jede Aufgabe des zusammengesetzten Dienstes spezifiziert, wobei eine Zuweisung der weiteren Vorrichtung zu der weiteren Aufgabe durch eine Übereinstimmungsbildungsprozedur zwischen der Transaktionseigenschaft der weiteren Vorrichtung und der der weiteren Aufgabe zugeordneten Transaktionsanforderung ausgeführt wird; und eine Kommunikationseinheit (120), die konfiguriert ist, um Aufgabendaten zu der weiteren Vorrichtung (150) zu senden, wobei die Aufgabendaten Eingangsdaten zum Erfüllen der weiteren Aufgabe aufweisen.

2. Vorrichtung nach Anspruch 1, wobei die Kommunikationseinheit des Weiteren konfiguriert ist, um die weitere Vorrichtung (150) zu koordinieren, indem Registrierungsdaten zur weiteren Vorrichtung gesendet werden, um die Verfügbarkeit der weiteren Vorrichtung zu prüfen.

3. Vorrichtung nach einem der Ansprüche 1 oder 2, wobei die Kommunikationseinheit (120) konfiguriert ist, um die weitere Vorrichtung (150) zu koordinieren, indem sie konfiguriert wird, Aktivierungsdaten zum Aktivieren der weiteren Vorrichtung (150) zu senden, um die weitere Aufgabe zu erfüllen und einen offenen Verbindungskanal beizubehalten, um eine Nachricht zu empfangen, dass die weitere Vorrichtung (150) die weitere Aufgabe abgeschlossen hat.

4. Vorrichtung nach einem der Ansprüche 1 bis 3, wobei die Kommunikationseinheit (120) des Weiteren konfiguriert ist, um Austrittsnachricht-Daten zu der weiteren Vorrichtung (150) zu senden, um anzugeben, dass die weitere Vorrichtung (150) davon befreit ist, zu dem zusammengesetzten Dienst beizutragen.

5. Vorrichtung nach einem der Ansprüche 2 bis 4, wobei die Vorrichtung (100) entsprechend einer Koordinationshierarchie mit der weiteren Vorrichtung (150) gekoppelt ist, wobei die Koordinationshierarchie eine koordinierende Vorrichtung, welche eine folgende Vorrichtung koordiniert, eine subkoordinierende Vorrichtung, die durch eine koordinierende Vorrichtung koordiniert wird und externe Daten des zusammengesetzten Dienstes modifiziert, und eine koordinierte Vorrichtung, welche interne Daten des zusammengesetzten Dienstes modifiziert, aufweist.

6. Vorrichtung nach einem der Ansprüche 1 bis 5, wobei die Verarbeitungseinheit (110) konfiguriert ist, um die weitere Vorrichtung zu bestimmen, um eine vorhergehende Vorrichtung zu ersetzen, die zuvor zugewiesen wurde, um die weitere Aufgabe zu erfüllen, und die nicht koordiniert werden kann.

7. Vorrichtung nach einem der Ansprüche 1 bis 6, wobei der zusammengesetzte Dienst eine kritische Zone ist, die ein Teil eines weiteren zusammengesetzten Dienstes ist und eine Transaktionskonsistenz innerhalb des weiteren zusammengesetzten Dienstes bereitstellt.

8. Verfahren mit einer Vorrichtung (100), die dazu bestimmt ist, um eine Aufgabe eines zusammengesetzten Dienstes zu erfüllen, wobei der zusammengesetzte Dienst durch einen Arbeitsablauf mit einer Mehrzahl von Aufgaben beschrieben wird: Bestimmen einer weiteren Vorrichtung (150) zum Erfüllen einer weiteren Aufgabe des zusammengesetzten Dienstes, wobei die weitere Vorrichtung aus mindestens einer Vorrichtung ausgewählt wird, die konfiguriert ist, um die weitere Aufgabe entsprechend Funktionsanforderungen zu erfüllen, und eine Transaktionseigenschaft aufweist, wobei die Transaktionseigenschaft durch ein Zustandsdiagramm spezifiziert wird, aus dem sich Beendigungszustände ergeben, die für die weitere Vorrichtung zugänglich sind; und Senden von Aufgabendaten zu der weiteren Vorrichtung, wobei die Aufgabendaten Eingangsdaten zum Erfüllen der weiteren Aufgabe aufweisen, wobei das Bestimmen der
weiteren Vorrichtung das Zugreifen und Verwenden von Sätzen annehmbarer Beendigungszustände des zusammengesetzten Dienstes, welche Transaktionsanforderungen der Aufgaben, entsprechend einer Transaktionsanforderung des zusammengesetzten Dienstes, darstellen, wobei ein Satz annehmbarer Beendigungszustände einen Beendigungszustand für jede Aufgabe des zusammengesetzten Dienstes spezifiziert, und das Zuweisen der weiteren Vorrichtung zu der weiteren Aufgabe durch Ausführen einer Übereinstimmungsbildungsprozedur zwischen der Transaktionseigenschaft der weiteren Vorrichtung und der der weiteren Aufgabe zugeordneten Transaktionsanforderung aufweist.

9. Verfahren nach Anspruch 8, wobei die Vorrichtung des Weiteren die weitere Vorrichtung durch Registrieren der weiteren Vorrichtung, um die Verfügbarkeit der weiteren Vorrichtung zu prüfen, koordiniert.

10. Verfahren nach Anspruch 8 oder 9, wobei die Vorrichtung des Weiteren die weitere Vorrichtung koordiniert, indem sie Aktivierungsdaten zum Aktivieren der weiteren Vorrichtung zur Erfüllung der weiteren Aufgabe sendet und überprüft, dass die weitere Vorrichtung die weitere Aufgabe abgeschlossen hat.

11. Verfahren nach einem der Ansprüche 8 bis 10, wobei die Vorrichtung die weitere Vorrichtung koordiniert, indem sie des Weiteren Austrittsnachricht-Daten zu der weiteren Vorrichtung sendet, um anzugeben, dass die weitere Vorrichtung davon befreit ist, zu dem zusammengesetzten Dienst beizutragen.

12. Verfahren nach einem der Ansprüche 9 bis 11, wobei die Vorrichtung und die weitere Vorrichtung Teile einer Koordinationshierarchie sind, wobei die Koordinationshierarchie eine koordinierende Vorrichtung, welche eine folgende Vorrichtung koordiniert, eine subkoordinierende Vorrichtung, die durch eine koordinierende Vorrichtung koordiniert wird und externe Daten des zusammengesetzten Dienstes modifiziert, und eine koordinierte Vorrichtung, welche interne Daten des zusammengesetzten Dienstes modifiziert, aufweist.

13. Verfahren nach einem der Ansprüche 8 bis 12, wobei die Vorrichtung die weitere Vorrichtung bestimmt, um eine vorhergehende Vorrichtung zu ersetzen, die zuvor zugewiesen wurde, um die weitere Aufgabe zu erfüllen, und die nicht koordiniert werden kann.

14. Verfahren nach einem der Ansprüche 8 bis 13, wobei der zusammengesetzte Dienst eine kritische Zone ist, die ein Teil eines weiteren zusammengesetzten Dienstes ist und eine Transaktionskonsistenz innerhalb des weiteren zusammengesetzten Dienstes bereitstellt.

15. Computerprogrammprodukt mit Befehlen, die von einem Computersystem ausführbar sind, das dafür bestimmt ist, eine Aufgabe eines zusammengesetzten Dienstes zu erfüllen, und welche das Computersystem veranlassen, Operationen eines Verfahrens nach einem der Ansprüche 8 bis 14 auszuführen.

## Revendications

1. Dispositif attribué pour remplir une tâche d'un service composite, le service composite étant décrit par un flux de travaux ayant une pluralité de tâches, le dispositif comportant : une unité de traitement (110) configurée pour déterminer un dispositif supplémentaire (150) pour remplir une tâche supplémentaire du service composite, le dispositif supplémentaire étant choisi à partir d'au moins un dispositif qui est configuré pour remplir la tâche supplémentaire conformément à des impératifs fonctionnels, en utilisant une propriété transactionnelle du dispositif supplémentaire, la propriété transactionnelle étant spécifiée par un diagramme d'état à partir duquel des états de fin qui sont accessibles par le dispositif supplémentaire suivent, en accédant à des ensembles d'états de fin acceptables du service composite et en utilisant ceux-ci, les ensembles d'états de fin acceptables représentant des impératifs transactionnels des tâches correspondant à un impératif transactionnel du service composite, un ensemble d'états de fin acceptables spécifiant un état de fin pour chaque tâche du service composite dans lequel une attribution du dispositif supplémentaire à la tâche supplémentaire est exécutée par une procédure de mise en concordance entre la propriété transactionnelle du dispositif supplémentaire et l'impératif transactionnel associé à la tâche supplémentaire ; et une unité de communication (120) configurée pour envoyer des données de tâche au dispositif supplémentaire (150), les données de tâche comportant des données d'entrée pour remplir la tâche supplémentaire.

2. Dispositif selon la revendication 1, l'unité de communications est en outre configurée pour coordonner le dispositif supplémentaire (150) en envoyant des données d'enregistrement au dispositif supplémentaire afin de contrôler une disponibilité du dispositif supplémentaire.

3. Dispositif selon l'une quelconque des revendications 1 ou 2, l'unité de communication (120) est configurée pour coordonner le dispositif supplémentaire (150) en étant configurée pour envoyer des données d'activation afin d'activer le dispositif supplémentaire (150) pour remplir la tâche supplémentaire et pour conserver un canal de connexion ouvert afin de recevoir un message indiquant que le dispositif supplémentaire (150) a terminé la tâche supplémentaire.

4. Dispositif selon l'une quelconque des revendications 1 à 3, l'unité de communication (120) est en outre configurée pour envoyer des données de message de sortie au dispositif supplémentaire (150) pour indiquer que le dispositif supplémentaire (150) est libéré de sa contribution au service composite.

5. Dispositif selon l'une quelconque des revendications 2 à 4, dans lequel le dispositif (100) est couplé au dispositif supplémentaire (150) conformément à une hiérarchie de coordination, la hiérarchie de coordination comportant un dispositif de coordination qui coordonne un dispositif suivant, un dispositif de sous coordination qui est coordonné par un dispositif de coordination et qui modifie des données externes du service composite, et un dispositif coordonné qui modifie des données internes du service composite.

6. Dispositif selon l'une quelconque des revendications 1 à 5, dans lequel l'unité de traitement (110) est configurée pour déterminer le dispositif supplémentaire afin de remplacer un dispositif précédent qui a été attribué précédemment pour remplir la tâche supplémentaire et dont la coordination a échoué.

7. Dispositif selon l'une quelconque des revendications 1 à 6, dans lequel le service composite est une zone critique qui fait partie d'un service composite supplémentaire et qui fournit une cohérence transactionnelle dans le service composite supplémentaire.

8. Procédé comportant un dispositif (100) attribué pour remplir une tâche d'un service composite, le service composite étant décrit par un flux de travaux ayant une pluralité de tâches consistant à : déterminer un dispositif supplémentaire (150) pour remplir une tâche supplémentaire du service composite, le dispositif supplémentaire étant choisi à partir d'au moins un dispositif qui est configuré pour remplir la tâche supplémentaire conformément à des impératifs fonctionnels et ayant une propriété transactionnelle, la propriété transactionnelle étant spécifiée par un diagramme d'état à partir duquel des états de fin qui sont accessibles par le dispositif supplémentaire suivent ; et envoyer des données de tâche au dispositif supplémentaire, les données de tâche comportant des données d'entrée pour remplir la tâche supplémentaire, dans lequel la détermination du dispositif supplémentaire comporte d'accéder à des ensembles d'états de fin acceptables du service composite et d'utiliser ceux-ci lesquels représentent des impératifs transactionnels des tâches correspondant à un impératif transactionnel du service composite, un ensemble des états de fin acceptables spécifiant un état de fin pour chaque tâche du service composite et attribuant le dispositif supplémentaire à la tâche supplémentaire en exécutant une procédure de mise en concordance entre la propriété transactionnelle du dispositif supplémentaire et l'impératif transactionnel associé à la tâche supplémentaire.

9. Procédé selon la revendication 8, le dispositif coordonnant en outre le dispositif supplémentaire en enregistrant le dispositif supplémentaire pour contrôler une disponibilité du dispositif supplémentaire.

10. Procédé selon la revendication 8 ou 9, le dispositif coordonnant en outre le dispositif supplémentaire en envoyant des données d'activation pour activer le dispositif supplémentaire afin de remplir la tâche supplémentaire, et en contrôlant que le dispositif supplémentaire a terminé la tâche supplémentaire.

11. Procédé selon l'une quelconque des revendications 8 à 10, le dispositif coordonnant le dispositif supplémentaire en envoyant en outre des données de message de sortie au dispositif supplémentaire pour indiquer que le dispositif supplémentaire est libéré de sa contribution au service composite.

12. Procédé selon l'une quelconque des revendications 9 à 11, dans lequel le dispositif et le dispositif supplémentaire font partie d'une hiérarchie de coordination, la hiérarchie de coordination comportant un dispositif de coordination qui coordonne un dispositif suivant, un dispositif de sous coordination qui est coordonné par un dispositif de coordination et qui modifie des données externes du service composite, et un dispositif coordonné qui modifie des données internes du service composite.

13. Procédé selon l'une quelconque des revendications 8 à 12, dans lequel le dispositif détermine le dispositif supplémentaire pour remplacer un dispositif précédent qui a été attribué précédemment pour remplir la tâche supplémentaire et dont la coordination a échoué.

14. Procédé selon l'une quelconque des revendications 8 à 13, dans lequel le service composite est une zone critique qui fait partie d'un service composite supplémentaire et qui fournit une cohérence transactionnelle dans le service composite supplémentaire.

15. Produit de programme informatique ayant des instructions qui sont exécutables par un système informatique attribué pour remplir une tâche de service composite et qui amènent le système informatique à exécuter des opérations d'un procédé selon l'une quelconque des revendications 8 à 14.
